# EUROPÄISCHE PATENTANMELDUNG

(11) **EP 1 030 156 A2**
(43) Veröffentlichungstag der Anmeldung: **23.08.2000**
(21) Anmeldenummer: 99114503.8
(22) Anmeldetag: 23.07.1999
(51) Int. Cl.: F28F 1/24

(54) **Wärmetauscher**

(30) Priorität: 16.02.1999 DE 29902705 U
(71) Anmelder: Pulverich, Peter, 35708 Haiger (DE)
(72) Erfinder: Wagner, Stefan, 08248 Klingenthal (DE)
(74) Vertreter: Helge, Reiner, Dipl.-Ing.

(57) **Zusammenfassung**

Die Erfindung betrifft einen Wärmetauscher , der aus Glattrohren mit aufgezogenen Querrippen besteht, wobei die ausgestanzten Querrippen aus Aluminium mit dem aus Kupfer bestehenden Glattrohr durch Wärmeeintrag unter Zuhilfenahme eines metallischen Bindemittels verbunden sind.

Bei dem Wärmetauscher, bestehend aus auf Glattrohren aufgezogenen Querrippen, sind die auf ein oder mehrere Glattrohre (1) aufgezogenen Querrippen (2) derart ausgebildet, daß die Ausstanzungen (3) zur Aufnahme des Glattrohres (1) topfförmig ausgebildet sind und in diesem Bereich eine Beschichtung (4) aus Kupfer oder einer Kupferlegierung aufweisen.

## Beschreibung

Die Erfindung betrifft einen Wärmetauscher , der aus Glattrohren mit aufgezogenen Querrippen besteht, wobei die ausgestanzten Querrippen aus Aluminium mit dem aus Kupfer bestehenden Glattrohr durch Wärmeeintrag unter Zuhilfenahme eines metallischen Bindemittels verbunden sind.

Bekannt sind Wärmetauscher mit Querrippen, bei denen die Querrippen straff auf das Glattrohr aufgeschoben sind (Presspassung).

Weiterhin bekannt ist die Herstellung von Wärmetauschern, bei denen die Querrippen mit geringem Spiel auf die Glattrohre aufgeschoben werden und die Befestigung der Querrippen auf dem Rohr durch Aufweiten erfolgt. Das Aufweiten des Rohres kann sowohl mechanisch als auch hydrostatisch erfolgen. Durch das Aufweiten erfolgt ein Schließen des Luftspaltes zwischen der Querrippe und dem Rohr.

In beiden Fällen wird somit eine Presspassung erreicht.

Der Nachteil dieser Lösungen liegt darin, daß sich beim Betrieb ein Luftspalt zwischen Rohr und Querrippe bedingt durch die Ausdehnung bilden kann.

Durch den Luftspalt kann der Wärmeübergang verringert bzw. blockiert werden, was zur Leistungsverringerung des Wärmetauschers führt. Besonders bei Verwendung von Materialien mit unterschiedlichen Ausdehnungskoeffizienten, beispielsweise Kupfer für die Rohre und Aluminium für die Querrippen, kann es zu relativ großen Luftspalten kommen und damit zu Leistungseinbußen.

Um den Wärmeübergang zwischen Querrippe und Rohr zu verbessern, werden zur Verbindung Löt- oder Schweißverfahren angewendet. Bei der Verwendung von Rohren und Querrippen aus Kupfer und/oder Kupferlegierung ist das am häufigsten angewandte Fügeverfahren das Flammlöten (Weichlöten).

Darüberhinaus kommen bei der Verwendung von anderen Werkstoffen, zum Beispiel Aluminium, Fügeverfahren wie Schutzgaslötverfahren oder Schweißverfahren zur Anwendung.

Bei der Verbindung von Kupfer mit Aluminium bzw. Aluminium mit Aluminium kommt das Nocolok-Verfahren zur Anwendung. Der Lötvorgang beim Nocolok-Verfahren ist sehr aufwendig bezüglich der einzuhaltenden Bedingungen (Temperaturbereich). Neben den hohen Investitionskosten für die Einrichtung zur Durchführung des Nocolok-Verfahrens wird auch ein hoher Energieaufwand benötigt.

Es war daher Aufgabe der vorliegenden Erfindung, einen Wärmetauscher mit Querrippen zu schaffen, bei dem Querrippen aus Aluminium auf Glattrohre aus Kupfer oder Kupferlegierungen durch ein Lötverfahren mit geringem technischen Aufwand verbunden sind.

Weiterhin soll durch den Einsatz von Querrippen aus Aluminium eine Gewichtsreduzierung des Wärmetauschers erreicht werden.

Erfindungsgemäß wird die Aufgabe dadurch gelöst, daß die auf ein oder mehrere Glattrohre aufgezogenen Querrippen derart ausgebildet sind, daß die Ausstanzungen zur Aufnahme der Glattrohre topfförmig ausgebildet sind und in diesem Bereich eine Beschichtung aus Kupfer oder einer Kupferlegierung aufweisen.

Die topfförmige Ausstanzung an der Querrippe ist gleichzeitig als Abstandshalter für die nächste Querrippe ausgebildet.

Die Beschichtung im Randbereich der topfförmigen Ausstanzung kann auf ihrer zum Glattrohr gewandten Oberfläche zum einen durch Kaltplattieren mit Kupferfolie oder zum anderen durch thermische - Aufspritzen, Bedampfen - oder galvanische Verfahren hergestellt werden.

Es ist auch möglich, für das Ausstanzen der Querrippen einseitig vollständig beschichtete Aluminiumbleche zu verwenden.

Durch die Verwendung von Glattrohren aus Kupfer und Querrippen aus Aluminium, die zumindest im Bereich, der mit dem Glattrohr in Verbindung steht, kupferbeschichtet sind, kann für deren Verbindung das Flammlötverfahren verwendet werden. Durch die Verwendung von Querrippen aus Aluminium kann eine Gewichtsreduzierung bis zu 25% erreicht werden.

Die Erfindung wird anhand der in den Zeichnung dargestellten Figuren näher erläutert.

Es zeigen
- Figur 1 -: einen Ausschnitt aus dem
Wärmetauscher mit Querberippung
- Figur 2 -: Schnittdarstellung der Querrippe

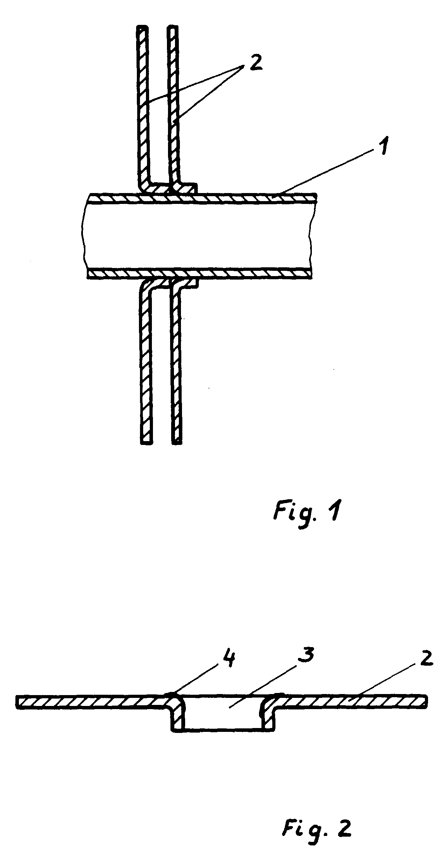

Der Wärmetauscher - Fig. 1 - besteht beispielsweise aus einem Glattrohr 1, auf dem die Querrippen 2 angeordnet sind. Das Glattrohr 1 besteht aus Kupfer, die Querrippe 2 aus Aluminium.

Die durch Ausstanzen hergestellten Querrippen 2 - Fig. 2 - werden auf das Glattrohr 1 aufgeschoben. In einem vorherigen Arbeitsschritt ist das Glattrohr 1 mit einer Lötzinnschicht versehen worden.

Die Querrippe 2 weist eine topfförmige Ausstanzung 3 auf, deren dem Glattrohr zugewandte Oberfläche eine Beschichtung 4 aus Kupfer aufweist.

Die topfförmigen Ausstanzungen 3 sind so ausgebildet, daß sie gleichzeitig den definierten Abstand zur nächsten Querrippe 2 herstellen.

Der Durchmesser der topfförmigen Ausstanzung 3 ist dabei so ausgeführt, daß die Querrippe 2 nahezu spielfrei aufgeschoben werden kann.

Die Verbindung zwischen dem Rohr 1 und der Querrippe 2 erfolgt mittels Lötverfahren. Das Verlöten erfolgt somit zwischen der Kupferschicht der Querrippe 2 und dem aus Kupfer bestehenden Glattrohr 1.

Mit dieser Verlötung wird ein guter Wärmeübergang vom Rohr 1 zur Querrippe 2 hergestellt.

## Patentansprüche

1. Wärmetauscher, bestehend aus auf Glattrohren aufgezogenen Querrippen, wobei die Glattrohre aus Kupfer oder Kupferlegierungen und die Querrippen aus Aluminium bestehen und durch Flammlöten miteinander verbunden werden,
dadurch gekennzeichnet, **daß**
die auf ein oder mehrere Glattrohre (1) aufgezogenen Querrippen (2) derart ausgebildet sind, daß die Ausstanzungen (3) zur Aufnahme des Glattrohres (1) topfförmig ausgebildet ist und in diesem Bereich eine Beschichtung (4) aus Kupfer oder einer Kupferlegierung aufweist.

2. Wärmetauscher nach Anspruch 1,
dadurch gekennzeichnet, **daß**
die topfförmige Ausstanzung (3) an der Querrippe (2) gleichzeitig als Abstandshalter ausgebildet ist.

3. Wärmetauscher nach Anspruch 1 und 2,
dadurch gekennzeichnet, **daß**
die Beschichtung der topfförmigen Ausstanzung (3) auf ihrer zum Glattrohr (1) gewandten Oberfläche durch Kaltplattieren mit Kupferfolie erfolgt.

4. Wärmetauscher nach Anspruch 1 bis 3,
dadurch gekennzeichnet, **daß**
die Beschichtung durch Bedampfen oder galvanisch mit Kupfer oder kupferhaltigem Material erfolgt.
